(19) Europäisches Patentamt
European Patent Office
Office européen des brevets

(11) EP 1 313 555 B1

(12) EUROPEAN PATENT SPECIFICATION

(45) Date of publication and mention of the grant of the patent: **21.07.2004 Bulletin 2004/30**

(21) Application number: **01960921.3**

(22) Date of filing: **22.08.2001**

(51) Int Cl.[7]: **B01J 20/04**, B01J 20/28, B01J 20/30

(86) International application number: **PCT/GB2001/003776**

(87) International publication number: **WO 2002/016027 (28.02.2002 Gazette 2002/09)**

# (54) IMPROVEMENTS IN OR RELATING TO CARBON DIOXIDE ABSORBENT FORMULATIONS

ABSORPTIONSZUSAMMENSETZUNGEN FÜR KOHLENDIOXID

AMELIORATIONS APPORTEES A DES FORMULATIONS ABSORBANT LE DIOXYDE DE CARBONE

(84) Designated Contracting States: **DE GB**

(30) Priority: **23.08.2000 GB 0020656**

(43) Date of publication of application: **28.05.2003 Bulletin 2003/22**

(73) Proprietor: **MOLECULAR PRODUCTS LIMITED**
**Thaxted, Essex CM6 2LT (GB)**

(72) Inventors:
- **JACKSON, Shaun**
  **Thaxted, Essex CM6 2LY (GB)**
- **CLARKE, Michael, John**
  **Halstead, Essex CO9 3DP (GB)**
- **ADDISON, John**
  **Duxford, Cambridgeshire CB2 4RD (GB)**
- **LINSDELL, Michael, Edward**
  **Cambridge, Cambridgeshire CB1 6UQ (GB)**
- **MCKERNAN, Ian, William**
  **Saffron Walden, Essex CB11 9FS (GB)**

(74) Representative: **Lipscombe, Martin John et al**
**Keith W Nash & Co,**
**Pearl Assurance House,**
**90-92 Regent Street**
**Cambridge CB2 1DP (GB)**

(56) References cited:
**EP-A- 0 393 964**
**EP-A- 0 445 776**
**WO-A-98/17385**
**WO-A-98/23370**
**DE-A- 19 740 736**
**US-A- 3 259 464**
**US-A- 4 407 723**

- **DATABASE WPI Section Ch, Week 198706 Derwent Publications Ltd., London, GB; Class E36, AN 1987-039068 XP002179586 & JP 61 293546 A (NIPPON CHEM IND CO LTD), 24 December 1986 (1986-12-24)**
- **DATABASE WPI Section Ch, Week 198347 Derwent Publications Ltd., London, GB; Class D13, AN 1983-824411 XP002179587 & JP 58 177137 A (TOPPAN PRINTING CO LTD), 17 October 1983 (1983-10-17)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 313 555 B1

## Description

### Field of the Invention

This invention relates to a carbon dioxide absorbent formulation, and to a method of making the formulation.

### Background of the Invention

Carbon dioxide absorbent formulations are well known and widely used in a number of applications. They may be included, for example, in re-breathing apparatus in which exhaled air is re-cycled. Such re-breathing apparatus includes respirators of the type worn in emergencies such as fire-fighting, mine or cave rescue, or the type used in diving equipment. In addition carbon dioxide absorbents may be used to reduce $CO_2$ levels in confined spaces (especially in submarines). The other major use of carbon dioxide absorbents is in medical anaesthesia: gaseous anaesthetic agents are routinely contained within closed systems, and a $CO_2$ absorbent is therefore required to reduce $CO_2$ levels in the recycled gases.

Dry calcium hydroxide (lime) alone will absorb carbon dioxide only slowly and with limited capacity at ambient temperatures, and is therefore of limited commercial use. This limitation has traditionally been overcome by including sodium hydroxide and/or potassium hydroxide to form a mixture known as sodalime. The addition of the alkali metal hydroxide is claimed significantly to increase the reaction rate by acting as a transfer agent in solution according to the equation:

$$CO_2 + H_2O \Leftrightarrow H_2CO_3$$

$$H_2CO_3 + 2\ NaOH \Leftrightarrow Na_2CO_3 + 2\ H_2O$$

$$Na_2CO_3 + Ca(OH)_2 \Leftrightarrow 2NaOH + CaCO_3$$

However the first step of this reaction does not occur at high pH (>10) and a more realistic mechanism probably involves the $CO_2$ initially reacting with $OH^-$ in solution to give the bicarbonate ($HCO_3^-$) ion, and subsequent fast decomposition of bicarbonate to carbonate ion ($CO_3^{2-}$) to give an overall reaction:

$$CO_2(g) + Ca(OH)_2(s) \overset{H_2O}{\Leftrightarrow} Ca\ CO_3\ (s) + H_2O\ (1)$$

where water is needed to catalyse the reaction but is not itself consumed (this better fits the observed solution pH and response to water content in the final product).

It is known that calcium chloride can be used to both enhance the water retention properties of sodalime (e.g. Canadian patent 1151633 & Stoessel PhD. Thesis Zurich University 1965) and to increase the carbon dioxide absorption capacity in a similar manner to that of adding sodium or potassium hydroxide.

However, calcium hydroxide with calcium chloride (or magnesium chloride) alone does not produce a material with the correct rheological properties necessary for processing or sufficient final hardness in the final product. A soft product tends to produce dust that can lead to respiratory irritation as well as reduced water tolerance in use. A soft material also tends to absorb water more readily and form a solid mass in the presence of the extra water that can build up in the absorber during use. This is especially significant in low flow anaesthesiology, in which moisture is retained and builds up in the breathing circuit.

Neither calcium chloride nor magnesium chloride alone will absorb carbon dioxide.

In the context of medical anaesthesia, a further complication exists. Carbon dioxide absorbents containing sodium or potassium hydroxide have been found to react with the anaesthetic agent Sevoflurane™ (Abbott Laboratories) to form by-products, including a fluorinated ether (fluoromethyl 2,2 difluoro-1-(trifluoromethyl) vinyl ether) known as compound A. Compound A is a known nephrotoxic agent. Accordingly, for use in medical anaesthesia, a $CO_2$ absorbent formulation must not only possess suitable $CO_2$-absorbing properties but should also give rise to minimal reaction with the anaesthetic agent, so as to avoid formation of toxic by-products.

Further, if a traditional sodalime absorbent is allowed to dry out it has been documented that the reaction of the dry sodalime with the anaesthetic Desflurane™ (Baxter Medical) can produce significant amounts of carbon monoxide. It is therefore advantageous to use a carbon dioxide absorbent that minimises this reaction.

## Summary of the Invention

In a first aspect the invention provides a carbon dioxide absorbent formulation comprising: a pharmaceutically acceptable hydroxide essentially free of sodium, potassium and barium hydroxides; calcium and/or magnesium chloride; a hardening agent selected from the group consisting of alumina silicate, alumino silicate or complex alumino silicate; and a non-film-forming binding agent selected from the group consisting of derivatised celluloses, gums and starch.

The inventors have surprisingly found that formulations in accordance with the invention are not only compatible with anaesthetic agents such as Sevoflurane™, (not giving rise to compound A), but are able to retain the high $CO_2$ absorption capacity of conventional sodalime absorbents, especially over an extended period of storage (e.g. 4 months or more).

The pharmaceutically acceptable hydroxide may be any hydroxide which has $CO_2$ absorbing ability and which is compatible with respiratory equipment (including equipment for medical anaesthesia) for use by humans. The preferred hydroxide is calcium hydroxide, which will normally be the major component of the formulation, typically present in the amount 70-90% w/w, preferably in the amount 75-85% w/w.

Those skilled in the art will appreciate that small amounts of sodium or potassium hydroxide are often found as impurities in other metal hydroxides (such as calcium hydroxide) and it is extremely difficult, if not impossible, to remove entirely such contaminants. Accordingly, it is sufficient for the purposes of the present invention that the pharmaceutically acceptable hydroxide is "essentially free" of sodium, potassium or barium hydroxide. Typically, the total amount of sodium, potassium and barium hydroxides in the composition of the invention will be less than 0.2% w/w, preferably less than 0.1% w/w, and more preferably less than 0.05% w/w, and the term "essentially free" should be construed accordingly.

The composition of the invention, as defined above, comprises calcium and/or magnesium chloride.

Calcium chloride and magnesium chloride are essentially chemically interchangeable within the context of preferred embodiments of the invention as, in the presence of a large excess of calcium hydroxide and moisture, the equilibrium:

$$MgCl_2 + Ca(OH)_2 \Leftrightarrow CaCl_2 + Mg(OH)_2$$

is established. As there is a large excess of calcium hydroxide present the equilibrium is displaced well over to the right, with essentially all the chloride present as calcium chloride or dissociated in solution. The magnesium hydroxide will be converted to magnesium carbonate in the presence of carbon dioxide that will further ensure that the equilibrium is predominantly to the right i.e. the chloride from magnesium chloride and that in calcium chloride are both essentially present as calcium chloride.

The total amount of calcium and/or magnesium chloride present in the formulation is typically in the amount 0.1-5% w/w, preferably 0.2-2.0% w/w, and more preferably in the amount 0.5-1.5% w/w.

The hardening agent is a substance which modifies the structure of the absorbent formulation and increases rigidity.

The hardening agents of the invention are alumino silicates, including alumina silicate ($Al_2O_3.2Si0_2$), and complex alumino silicates, especially sodium, potassium, calcium or magnesium aluminosilicate. The hardening agent is typically present in the amount 0.1-5.0% w/w, preferably 0.2-2.0% w/w, and more preferably 0.5-1.5% w/w.

The non-film-forming binding agent is conveniently a water insoluble, or only partially water soluble, material (typically, a polymer) with bonding and plasticising properties. The binding agents of the invention are derivatised celluloses such as alkoxycelluloses, especially carboxymethylcellulose (CMC), hydroxymethylcellulose (HMC), or hydroxypropylmethyl cellulose. Other suitable binding agents include gums, such as xanthan gum, gum arabic or gum tragacanth. Also, starch may be used as the binding agent. The binding agent is typically present in the amount 0.1-5.0% w/w, preferably 0.2-2.0% w/w, and more preferably 0.5-1.5% w/w.

The formulation of the invention may additionally comprise other minor components such as an indicator dye. Suitable dyes include ethyl violet, methyl violet, Titan yellow, Kenazol yellow and Clayton yellow. These dyes will conveniently be present in the amount 0.01-0.1% w/w, preferably 0.05% w/w. Another minor component which may advantageously be included in the formulation is a detergent, especially an anionic detergent. A preferred anionic detergent is Synperonic NP8. The detergent is desirably present in the amount 0.005-1.0% w/w, preferably in the amount 0.01-0.05% w/w.

All the above % w/w indications relate to the final dry weight of the formulation. The formulation will typically comprise between 12 and 25% w/w water, preferably 14-18% w/w, (which is, of course, as a % of the wet weight of the formulation).

In a second aspect the invention provides a method of making a carbon dioxide absorbent composition in accordance with the first aspect of the invention defined above, the method comprising: mixing together suitable amounts of (a) a pharmaceutically acceptable hydroxide essentially free of sodium, potassium and barium hydroxides, (b) calcium and/or magnesium chloride, (c) a hardening agent, and (d) a non-film-forming binder; and adjusting a water-content of the composition to a level of 12-25% w/w.

Typically, the components (a)-(d) are mixed together with an amount of water to form a paste, which is then extruded to form granules. The granulated material is dried to impart hardness, then sprayed with water to establish the desired water content. Advantageously, the composition will be produced so as to comply with the USP (United States Pharmacopeia) for sodalime.

Methods of preparing conventional carbon dioxide absorbents are well-known to those skilled in the art and can be applied to manufacture of the absorbent of the invention without exercise of inventive activity.

Carbon dioxide absorbent formulations in accordance with the invention may be used in any of the situations in which conventional sodalime and sodalime type absorbents are employed (e.g. in submarines and emergency respiratory apparatus). In particular, the formulation is especially suitable for use in medical anaesthesiology, because of its compatibility with inhalational anaesthetics.

In a third aspect the invention provides a method of absorbing carbon dioxide in medical anaesthesiology, the method comprising contacting a gas stream containing carbon dioxide with a carbon dioxide absorbent formulation in accordance with the first aspect of the invention defined above, so as to absorb at least some of the carbon dioxide from the gas stream. Those skilled in the art will appreciate that the third aspect of the invention can readily be put into effect by substituting conventional carbon dioxide absorbent formulations in available medical breathing circuits with an equivalent amount of a formulation in accordance with the first aspect of the invention.

The various aspects of the invention will now be described by way of illustrative example and with reference to the accompanying drawings, in which:

Figure 1 is a schematic representation of the apparatus used to test the properties of various carbon dioxide absorbent formulations;
Figure 2 is a bar chart showing the $CO_2$ absorbent capacity of various carbon dioxide absorbent formulations; and
Figure 3 is a graph of carbon dioxide breakthrough time (MCT minutes) against time in storage (in months), for a formulation in accordance with the invention (square symbols) and a commercially available formulation (lozenge symbols).

## EXAMPLES

### Example 1

Five sample preparations of various carbon dioxide absorbent formulations were prepared. These were identified as Sample 1 to Sample 5, respectively. Samples 1 and 2 were samples of a $CO_2$ absorbent formulation in accordance with the invention.

The samples were prepared using calcium hydroxide (Lime - Ex Buxton Lime, Derbyshire), sodium carboxymethyl cellulose (CMC, ex Twinstar Chemicals Ltd), alumina silicate (PFA ex Lawrence Industries, Staffordshire, UK), calcium chloride (Molecular Products, Thaxted), and magnesium chloride (Hayes Chemical). Any additional chemicals were purchased from reputable laboratory suppliers as reagent grade materials. No sodium, potassium or barium hydroxides were added to the samples. The dry components were mixed with water and the dye solution prior to extruding the well-mixed paste through a die plate (APV screw feed mixer/extruder) onto the conveyor belt of a continuous feed oven (APV Dryers, Carlisle). The extruded products were air dried at 135°C before being sieved to a size distribution corresponding to USP medical sodalime. This material was then sprayed with water and allowed to stand for 24 hours to achieve uniform water distribution at approximately 17.5% (USP specification is between 12 and 19% water content).

Table 1, below, shows the % formulation of samples 1-5.

Table 1

| | $Ca(Cl)_2$ % w/w | $Mg(Cl)_2$ % w/w | $MgSO_4$ % w/w | $Al_2O_3.SiO_2$ % w/w | NaCl % w/w | CMC % w/w | Ethyl Violet soln. % w/w |
|---|---|---|---|---|---|---|---|
| Sample 1 | 1 | | | 1 | | 1 | 0.05 |
| Sample 2 | | 1 | | 1 | | 1 | 0.05 |
| Sample 3 | | | 1 | 1 | | 1 | 0.05 |
| Sample 4 | | | | | | | 0.05 |
| Sample 5 | | | | 1 | 1 | 1 | 0.05 |

The balance is calcium hydroxide. Analysis % w/w is the concentration in the dry product. The dry product was wetted with 17.5% water to produce the final absorbent material. The properties of the various samples were then investigated, as described below.

Example 2

The carbon dioxide absorbing capacity of samples 1-4 from Example 1 was compared in a test with four different commercially available carbon dioxide absorbent formulations ("com 1" to "com 4" respectively), supplied for use in medical anaesthesia equipment. Com 1 to com 4 were predominantly calcium hydroxide ($Ca(OH)_2$) with additional small percentage amounts of other materials. The final products contained between 12 and 20% water. Com 1 and com 2 were sodalime absorbents, com 3 and com 4 were "sodalime type" absorbents, not comprising sodium or potassium hydroxides.

Com 1 was Drägersorb™ (Dräger Sicherheitstechnik GmbH, Lübeck, Germany) which is a sodalime containing approx. 1-3 % sodium hydroxide.

Com 2 was Sodasorb™ (W R Grace & Co, Lexington, MA) which is a sodalime containing approx. 2-4% sodium hydroxide, and 2-4% potassium hydroxide.

Com 3 was Baralyme™ (Allied Health Care, St Louis, MO) which is a sodalime type absorbent comprising $Ca(OH)_2$ and 20% $Ba(OH)_2.8H_2O$, with approximately 3-5% potassium hydroxide and 2-4% sodium hydroxide.

Com 4 was Amsorb™ (Armstrong Medical, Belfast, N. Ireland) which is a "sodalime type" absorbent which contains no added sodium or potassium hydroxide, but does contain approx. 1% calcium chloride and approx. 1% calcium sulphate. WO 98/23370 describes Amsorb™ type formulations in more detail.

The $CO_2$ absorption capacity of com1 - com 4 and samples 1-4 was tested using equipment as illustrated in Figure 1.

Referring to Figure 1, the equipment formed a semi-closed circuit indicated generally by reference numeral 10, comprising a medical ventilation unit (12), anaesthesia machine comprising the relevant sample under test (14), and an artificial lung (16). Fresh oxygen (and, as described in Example 3, anaesthetic agent) were introduced into the circuit, in the same way as in clinical practice, at inlet (18). $CO_2$ was fed into the expiratory arm of the artificial lung at $CO_2$ inlet (20) to simulate expired $CO_2$ from the patient.

Outlet (22) allowed for extraction of samples of gas from the circuit. Samples were analysed by infra-red spectrometry using a JULIAN-Dräger anaesthesia machine (Dräger Medizintechnik, Lübeck, Germany) which was also used to control the ventilation rate and flow rate of anaesthetic agent. The $CO_2$ flow rate through $CO_2$ inlet (20) was controlled by an Aalborg precision rotameter comprising a 150 mm tube fitted with a 15 turn precision valve. A calibration table for $CO_2$ was provided by the manufacturer (Aalborg, Germany). Claimed precision is about 2% and reproducibility error about 0.25%.

A sample size of 800 ml of absorbent was used. This is approximately half of the total filling volume of the absorber canister used. The canisters were integrated into the breathing circuit of the anaesthesia machine and ventilated with a tidal volume of 900 ml and at a respiratory rate of 12 per minute resulting in a minute ventilation of 10.8 Litres. 100% oxygen was used for basic ventilation.

To test the $CO_2$ absorbing capacity of the various absorbent formulations, compressed carbon dioxide was introduced to the circuit using an inlet pressure of approximately 5 atmospheres. This pressure was necessary to overcome back pressure of the breathing circle and to reduce flow changes during the breathing cycle.

For an initial period of 35 minutes, $CO_2$ was introduced at a rotameter setting of 367 ml/min, which was found to produce a $CO_2$ level of about 3.5 vol % in the gas entering the absorbent canister (and which represents a value typically observed during anaesthesia). After this initial period, $CO_2$ was introduced at a rotameter setting of 510 ml/

min, giving a $CO_2$ level in the expiratory arm of the artificial lung of about 5 vol %. This setting was maintained until a level of 0.5 vol% $CO_2$ could be detected in the inspiratory arm of the artificial lung, indicating that the $CO_2$ absorbing capacity of the absorbent under test was approaching exhaustion.

The amount of $CO_2$ absorbed by the test sample was calculated simply by multiplying the recorded time in minutes by the indicated $CO_2$ inflow per minute (taking account of the lower inflow rate for the first 35 minutes of the test). The theoretical absorption capacity (in litres of carbon dioxide per kilogram of absorbent) could then be derived by simple calculation with knowledge of the density of the test sample.

The test was performed three times, and average results obtained. These are shown for each of com 1-4 and samples 1-4 in Table 2 below, which also includes details of the composition of the different absorbent formulations for ease of reference. The table also shows the amount of time (in minutes) taken for the inspiratory $CO_2$ level to reach 0.5 vol %.

Table 2

| | Com 1 | Com 2 | Com 3 | Com 4 | Sample 1 | Sample 2 | Sample 3 | Sample 4 |
|---|---|---|---|---|---|---|---|---|
| KOH % w/w | | 1-3 | 3-5 | | | | | |
| NaOH % w/w | 1-3 | 1-2 | 2-4 | | | | | |
| $Ba(OH)_2 8H_2O$ % w/w | | | 20 | | | | | |
| $Ca(Cl)_2$ | | | | 1 | 1 | | | |
| $Mg(Cl)_2$ | | | | | | 1 | | |
| $MgSO_4$ | | | | | | | 1 | |
| $2CaSO_4.H_2O$ | | | | 5 | | | | |
| $Al_2O_3.2SiO_2$ | | | | | 1 | 1 | 1 | |
| | | | | | | | | |
| $CO_2$ capacity l/kg | 141 | 93 | 74 | 50 | 106 | 94 | 81.8 | 86 |
| Std error +/- | 1.4 | 9.3 | 1.9 | 1.7 | 3.7 | 0.5 | 2.9 | 0.7 |
| | | | | | | | | |
| test time minutes | 177 | 138 | 113 | 73 | 118 | 119 | 100 | 103 |
| Std error +/- | 2.9 | 11 | 5 | 1.7 | 4.1 | 0 | 3.4 | 1.2 |

Component % w/w figures for the commercial samples are nominal amounts based on analysis or available literature. Sodium and potassium hydroxide was analysed by solvent extraction with neutralised methanol, acid titration for hydroxide content and analysis by atomic absorption (AA) or inductively coupled plasma (ICP) spectroscopy for the sodium and potassium levels. Note that these figures for com 1-com 4 are based on the samples as ready for use, whilst the composition for samples 1-5 in Table 1 and 1-4 in Table 2 are based on analysis of the dried formulation. Since, as used, samples 1-5 comprised about 17.5 % w/w water, the composition values for samples 1-5 shown in the tables should be multiplied by a factor of approximately 0.85 to give a direct comparison with com 1-4.

The results in Table 2 indicate that removal of potassium, sodium and barium hydroxides from sodalime and sodalime type absorbers reduced the capacity for absorbing carbon dioxide, as seen in the case of com 4 and sample 4. Surprisingly however, inclusion of a hardening agent and non-film-forming binder as minor components in samples 1 and 2 gives a capacity for carbon dioxide removal similar to existing commercial absorbents. The carbon dioxide removal capacity of com 4 was only 47-53% of the capacity of the samples (1 & 2) in accordance with the invention (i. e. the invention provides about a 100% improvement). Similarly, sample 4 which contained no calcium chloride, magnesium chloride or hardening agent, had between 10 and 18% less capacity than samples 1 and 2. Sample 4 simply comprised lime with dye added and had been processed and extruded to meet the USP (United States Pharmacopeia) requirements for particle size distribution, but was too soft and dusty for commercial use. Samples 1 and 2 met the USP specification for sodalime and had a capacity to absorb carbon dioxide above the average of the four commercial samples, com 1-4.

The results shown in Table 2 are also presented graphically in Figure 2. Figure 2 is a bar chart showing the $CO_2$ capacity (in litres $CO_2$ per Kg of absorbent) (left hand column) and time taken (in minutes) (right hand column) in the test for the concentration of $CO_2$ in the inspiratory arm of the artificial lung to reach 0.5 vol % for each of com 1-4 and samples 1-4.

Example 3

In this example, com 1-4 and samples 1-5 were compared with respect to interaction with Sevoflurane™ and formation of the toxic substance compound A. The test equipment used was as described above in Example 2. As before, $CO_2$ was introduced initially at 367 ml/min for the first 35 minutes, and subsequently at 510 ml/min until the end of the test.

Sevoflurane™ was introduced after 5 minutes of ventilation with the $O_2/CO_2$ mixture. Gas samples for compound A analysis were taken before, and every 10 minutes after, Sevoflurane™ introduction for a total period of 30 minutes. Compound A analysis was performed using the method described by Cunningham *et al* (1995 J. Chromatogr. B 668, 41-52).

Each formulation was tested three times and the mean concentration of compound A (after 30 minutes) was calculated. The results are shown in Table 3 below.

Table 3

| | Com 1 | Com 2 | Com 3 | Com 4 | Sample I | Sample 2 | Sample 3 | Sample 4 | Sample 5 |
|---|---|---|---|---|---|---|---|---|---|
| Compound A Ppm | 34 | 17 | 27 | <1 | <1 | <1 | 16 | 20 | 6.0 |
| Std error +/- | 1.5 | 1.5 | 3.0 | | | | 0.6 | 0.7 | 0.6 |

The results of Table 3 show that, whilst removing sodium, potassium and barium hydroxide reduced the interaction with Sevoflurane™ to produce compound A, they are not the only factors. Sample 5 (containing neutral sodium chloride with binding agent), Sample 3 (containing magnesium sulphate with hardening agent) and Sample 4 (containing no added minor constituent) all failed to suppress compound A formation entirely. Therefore it is not just the absence of the sodium, potassium or barium hydroxides that is involved, but the combination of materials in samples 1 & 2 (and com 4).

Example 4

When dried to below circa 2% water content, most commercial sodalime type absorbents will react with a range of inhalation anaesthetic agents to produce carbon monoxide (as disclosed in Anaesthesist 1996; 45(9):798-801 and Br. J. Anaesth. 1999, 8281:33 p1090). The drying out of sodalime absorbents can occur in a clinical environment if the absorber is left unused for several days in a warm atmosphere without being sealed, e.g. over a weekend, (see AANA J 1996 Feb; 64(1):41-7).

Samples of commercially available (com 1-com 4) and specially made (samples 1, 2 and 5) $CO_2$ absorbents were dried under standardised conditions (see below) by blowing with dry gas for extended periods until no more moisture was removed. The materials were then used as detailed below in the presence of Desflurane™ and the amount of carbon monoxide produced was measured.

The test was performed as follows.

The fresh absorbents, filled in Dräger ISO absorbers (volume 1 litre), were dried in a continuous oxygen flow @ 12 1/min) for at least 72 hours until weight remained constant. Drying was considered to be complete when no further weight loss (<005% of wet weight) could be observed within 24hours. Weight was controlled during drying using a precision balance (Sartorius MC1 LC 4800 P, range 0-1600 g, resolution 0.02 g). The dried absorbents were stored in a dry $O_2$ flow of 2 l/min until use, when weight was checked again. For the experiments, dry soda lime was filled into a Drager ISO absorber.

Desflurane™ was introduced in a carrier gas of 2 l/min $O_2$ at 5 vol % for 2 hours from the bottom to the top through the Dräger ISO-absorber filled with the dry absorbent sample. Calibrated vaporisers were used for the Desflurane anaesthetic agent At the absorber outlet, gas was sampled at 300 ml/min for carbon monoxide determination. To remove water, any volatile organic material, and possible degradation products, all of which may cause cross sensitivity, the sample gas stream was passed through two cooling traps (0°C (ice), -79°C (dry ice)) and an activated charcoal filter (15 ml). Carbon monoxide concentration was continuously determined by IR absorption using an ANDROS 6600 OIML class optical bench (range 10-100,000 ppm, resolution 10 ppm) as the primary method. The measured data were stored in one second intervals.

To validate these results, two further methods were employed: in the low range a continuous electrochemical method was used (DRAGER Pac 111, range 0-2000 ppm, reaction principle: $CO + H_2O \Rightarrow CO_2 + 2H^+ + 2e$, $\frac{1}{2} O_2 + 2H^+ + 2e^- \Rightarrow H_2O$). Higher concentrations were validated by a chemical method using appropriate DRAGER-TUBES (reaction principle: $5 CO + I_2O_5 \Rightarrow I_2 + 5CO_2$). To provide the required amount of gas within a short time, the sample

stream gas was collected in a reservoir. Baseline CO activity was determined using dry absorbent with Desflurane™ anaesthetic at 5 vol % in 2 l/min of dry oxygen.

The total amount of CO produced during the 2 hour observation period was calculated from the gas flow through the canister and the concentrations as measured by IR absorption. All experiments were performed three times.

The results are shown in Table 4 below.

Table 4

| | Com 1 | Com 2 | Com 3 | Com 4 | Sample 1 | Sample 2 | Sample 5 |
|---|---|---|---|---|---|---|---|
| Total CO ml | 354 | 593 | 1,181 | <1 | <1 | <1 | 53.8 |
| Std error +/- | | 58 | | | | | 4.2 |
| | | | | | | | |
| Peak CO ppm | 14,000 | 19,000 | 16,000 | 36 | 60 | 16.7 | 476 |
| Std error +/- | | 1,185 | | 20 | 25 | 3.3 | 43 |
| | | | | | | | |

It can be seen from Table 4 that the removal of sodium, potassium or barium hydroxide reduced the amount of carbon monoxide generated by the interaction with Desflurane™. However, again the materials of samples 1 and 2 (and com 4) suppressed carbon monoxide formation, whereas sample 5 (containing sodium chloride) still produced a significant amount of carbon monoxide.

Taking the results of these experiments together, it is apparent that samples 1 & 2, which are examples of $CO_2$ absorbent formulations in accordance with the invention, are able to combine the low rates of compound A and carbon monoxide formation associated with commercial sample com 4 (which is essentially free of sodium, potassium or barium hydroxides), with the high $CO_2$ absorption capacity of conventional commercial sodalime absorbents (com1-3), which do contain added sodium, potassium or barium hydroxides. These findings are unexpected, as neither calcium/magnesium chlorides, hardening agents nor non-film-forming binding agents have any $CO_2$ absorption properties themselves.

Example 5

In this example, a $CO_2$ absorbent formulation in accordance with the invention was compared with a prior art formulation, to investigate the stability of their respective $CO_2$ absorption capacities after storage over an extended period.

A formulation according to sample 1 (as in Example 2 above) was tested relative to Sofnolime (a commercially available soda lime-based, medical grade $CO_2$ absorbent, obtainable from Molecular Products Limited) in a standard breathing circuit as illustrated in Figure 1 and described previously. The formulation was stored in dry conditions (in hermetically sealed packaging with a moisture barrier) at ambient temperature (i.e. unheated) for up to 12 months or so, and aliquots tested for their $CO_2$ absorption capacity by determining the "MCT time" (that is, the time taken to $CO_2$ breakthrough i.e. for the measured $CO_2$ concentration in the inspiratory arm of the circuit to exceed 0.5 vol %, as described in the previous examples), and compared to fresh samples of Sofnolime. In addition, a formulation according to com 4 (as in Example 2 above) was stored and tested in identical conditions, to allow fair comparison of sample 1 and com 4 (the composition of com 4 is closest to the composition of fomulations in accordance with the invention). The results are shown in graphical form in Figure 3. From the graph it is apparent that the $CO_2$ absorption capacity of a formulation in accordance with the invention is substantially constant and unchanged even after 10 months storage in conditions typical of distribution chains. (The results for the Sofnolime, omitted for clarity, were essentially similar.) In contrast, the absorption capacity of formulation com 4 declines over time, and after about 8 months' storage the $CO_2$ absorption capacity of com 4 was reduced by about 25%.

**Claims**

1. A carbon dioxide absorbent formulation comprising: a pharmaceutically acceptable hydroxide essentially free of sodium, potassium and barium hydroxides; calcium and/or magnesium chloride; a hardening agent selected from the group consisting of alumina silicate, alumino silicate or complex alumino silicate; and a non-film-forming binding agent selected from the group consisting of derivatised celluloses, gums and starch.

2. A carbon dioxide absorbent according to claim 1, comprising calcium hydroxide.

3. A carbon dioxide absorbent according to claim 2, comprising 70-90% w/w dry weight calcium hydroxide.

4. A carbon dioxide absorbent according to claim 3, comprising 75-85% w/w dry weight calcium hydroxide.

5. A carbon dioxide absorbent according to any one of the preceding claims, comprising a total amount of calcium chloride and/or magnesium chloride in the amount 0.2-2.0 % w/w dry weight.

6. A carbon dioxide absorbent according to claim 5, comprising a total amount of calcium chloride and/or magnesium chloride in the amount 0.5-1.5 % w/w dry weight.

7. A carbon dioxide absorbent according to any one of the preceding claims, wherein the hardening agent comprises alumina silicate or a sodium, potassium, calcium or magnesium aluminosilicate.

8. A carbon dioxide absorbent according to any one of the preceding claims, wherein the hardening agent is present in the amount 0.2-2.0 % w/w dry weight.

9. A carbon dioxide absorbent according to claim 8, wherein the hardening agent is present in the amount 0.5-1.5 % w/w dry weight.

10. A carbon dioxide absorbent according to any one of the preceding claims, wherein the non-film-forming binding agent comprises one or more of the following: carboxymethylcellulose, hydroxymethylcellulose, hydroxypropylmethylcellulose, xanthan gum, gum tragacanth, gum arabic or starch.

11. A carbon dioxide absorbent according to any one of the preceding claims, comprising an indicator dye in the amount 0.01-0.1 % w/w dry weight.

12. A carbon dioxide absorbent according to any one of the preceding claims comprising a detergent in the amount 0.005 - 1.0 % w/w dry weight.

13. A carbon dioxide absorbent according to any one of the preceding claims, comprising an anionic detergent.

14. A carbon dioxide absorbent according to any one of the preceding claims, having a water content in the range 12-25 % w/w.

15. A carbon dioxide absorbent according to any one of the preceding claims, having a water content in the range 14-18 % w/w.

16. A method of making a carbon dioxide absorbent in accordance with any one of the preceding claims, the method comprising the steps of: mixing together suitable amounts of (a) a pharmaceutically acceptable hydroxide, essentially free of sodium, potassium or barium hydroxides; (b) calcium and/or magnesium chloride; (c) a hardening agent; and (d) a non-film-forming binding agent; and adjusting a water-content of the mixture to a level of 12-25 % w/w.

17. A method according to claim 16, wherein (a)-(d) are mixed with an amount of water to form a paste, and the paste is extruded to form granules.

18. A method of absorbing carbon dioxide in medical anaesthesiology, the method comprising contacting a gas stream containing carbon dioxide with a carbon dioxide absorbent formulation in accordance with any one of claims 1-15, so as to absorb at least some of the carbon dioxide from the gas stream.

**Patentansprüche**

1. Kohlendioxidabsorbens-Formulierung, umfassend: ein pharmazeutisch akzeptables Hydroxid, das im Wesentlichen frei von Natrium-, Kalium- und Bariumhydroxiden ist; Calcium- und/oder Magnesiumchlorid; ein Härtungsmittel, das aus der Gruppe ausgewählt ist, die aus Tonerdesilikat, Alumosilikat oder komplexem Alumosilikat besteht; und ein nicht filmbildendes Bindemittel, das aus der Gruppe ausgewählt ist, die aus derivatisierten Cellulosen, Gummen und Stärke besteht.

**2.** Kohlendioxidabsorbens nach Anspruch 1, das Calciumhydroxid umfasst.

**3.** Kohlendioxidabsorbens nach Anspruch 2, das 70-90 Massen-% Calciumhydroxid in Trockenmasse umfasst.

**4.** Kohlendioxidabsorbens nach Anspruch 3, das 75-85 Massen-% Calciumhydroxid in Trockenmasse umfasst.

**5.** Kohlendioxidabsorbens nach einem der vorigen Ansprüche, das eine Gesamtmenge Calciumchlorid und/oder Magnesiumchlorid in einer Menge von 0,2-2,0 Massen-% in Trockenmasse umfasst.

**6.** Kohlendioxidabsorbens nach Anspruch 5, das eine Gesamtmenge Calciumchlorid und/oder Magnesiumchlorid in einer Menge von 0,5-1,5 Massen-% in Trockenmasse umfasst.

**7.** Kohlendioxidabsorbens nach einem der vorigen Ansprüche, bei dem das Härtungsmittel Tonerdesilikat oder ein Natrium-, Kalium-, Calcium- oder Magnesiumalumosilikat umfasst.

**8.** Kohlendioxidabsorbens nach einem der vorigen Ansprüche, bei dem das Härtungsmittel in einer Menge von 0,2-2,0 Massen-% in Trockenmasse vorhanden ist.

**9.** Kohlendioxidabsorbens nach Anspruch 8, bei dem das Härtungsmittel in einer Menge von 0,5-1,5 Massen-% in Trockenmasse vorhanden ist.

**10.** Kohlendioxidabsorbens nach einem der vorigen Ansprüche, bei dem das nicht filmbildende Bindemittel eine oder mehrere der folgenden Substanzen umfasst: Carboxymethylcellulose, Hydroxymethylcellulose, Hydroxypropylmethylcellulose, Xanthangummi, Tragantgummi, Gummiarabikum oder Stärke.

**11.** Kohlendioxidabsorbens nach einem der vorigen Ansprüche, das einen Indikatorfarbstoff in einer Menge von 0,01-0,1 Massen-% in Trockenmasse umfasst.

**12.** Kohlendioxidabsorbens nach einem der vorigen Ansprüche, das ein Detergens in einer Menge von 0,005-1,0 Massen-% in Trockenmasse umfasst.

**13.** Kohlendioxidabsorbens nach einem der vorigen Ansprüche, das ein anionisches Detergens umfasst.

**14.** Kohlendioxidabsorbens nach einem der vorigen Ansprüche, das einen Wassergehalt im Bereich von 12-25 Massen-% hat.

**15.** Kohlendioxidabsorbens nach einem der vorigen Ansprüche, das einen Wassergehalt im Bereich von 14-18 Massen-% hat.

**16.** Verfahren zur Herstellung eines Kohlendioxidabsorbens nach einem der vorigen Ansprüche, wobei das Verfahren die Schritte umfasst: Zusammenmischen von geeigneten Mengen von (a) einem pharmazeutisch akzeptablen Hydroxid, das im Wesentlichen frei von Natrium-, Kalium- oder Bariumhydroxiden ist; (b) Calcium-und/oder Magnesiumchlorid; (c) einem Härtungsmittel; und (d) einem nicht filmbildenden Bindemittel; und Einstellen eines Wassergehalts der Mischung auf ein Niveau von 12-25 Massen-%.

**17.** Verfahren nach Anspruch 16, bei dem (a)-(d) mit einer Menge Wasser gemischt werden, um eine Paste zu bilden, und die Paste stranggepresst wird, um Granulat zu bilden.

**18.** Verfahren zum Absorbieren von Kohlendioxid in der medizinischen Anästhesiologie, wobei das Verfahren umfasst: Kontaktieren eines kohlendioxidhaltigen Gasstroms mit einer Kohlendioxid absorbierenden Formulierung gemäß einem der Ansprüche 1-15, so dass wenigstens ein Teil des Kohlendioxids aus dem Gasstrom absorbiert wird.

## Revendications

1. Formulation absorbante de dioxyde de carbone comprenant : un hydroxyde acceptable sur le plan pharmaceutique essentiellement dépourvu d'hydroxydes de sodium, de potassium et de baryum ; du chlorure de calcium et/ou de magnésium, un agent durcissant choisi parmi le silicate d'alumine, l'alumino-silicate et un complexe d'alumino-silicate ; et un agent liant ne formant pas un film choisi parmi des dérivés de celluloses, des gommes et l'amidon.

2. Formulation absorbante de dioxyde de carbone selon la revendication 1, comprenant de l'hydroxyde de calcium.

3. Formulation absorbante de dioxyde de carbone selon la revendication 2, comprenant 70-90% en poids de masse sèche d'hydroxyde de calcium.

4. Formulation absorbante de dioxyde de carbone selon la revendication 3, comprenant 75-85% en poids de masse sèche d'hydroxyde de calcium.

5. Formulation absorbante de dioxyde de carbone selon l'une quelconque des revendications précédentes, comprenant une quantité totale de chlorure de calcium et/ou de chlorure de magnésium en quantité de 0,2 à 2,0 % en poids de masse sèche.

6. Formulation absorbante de dioxyde de carbone selon la revendication 5, comprenant une quantité totale de chlorure de calcium et/ou de chlorure de magnésium en quantité de 0,5 à 1,5 % en poids de masse sèche.

7. Formulation absorbante de dioxyde de carbone selon l'une quelconque des revendications précédentes, dans laquelle l'agent durcissant est le silicate d'alumine ou un aluminosilicate de sodium, potassium, de calcium ou de magnésium.

8. Formulation absorbante de dioxyde de carbone selon l'une quelconque des revendications précédentes, dans laquelle l'agent durcissant est présent en une quantité de 0,2 à 2,0 % en poids de masse sèche.

9. Formulation absorbante de dioxyde de carbone selon la revendication 8, dans laquelle l'agent durcissant est présent en une quantité de 0,5 à 1,5 % en poids de masse sèche.

10. Formulation absorbante de dioxyde de carbone selon l'une quelconque des revendications précédentes, dans laquelle l'agent liant ne formant pas un film comprend un ou plusieurs des composés suivants : carboxyméthylcellulose, hydroxyméthylcellulose, hydroxypropylméthylcellulose, gomme de xanthane, gomme adragante, gomme arabique ou amidon.

11. Formulation absorbante de dioxyde de carbone selon l'une quelconque des revendications précédentes, comprenant un colorant indicateur en une quantité de 0,01 à 0,1 % en poids de masse sèche.

12. Formulation absorbante de dioxyde de carbone selon l'une quelconque des revendications précédentes, comprenant un détergent en une quantité de 0,005 à 1,0 % en poids de masse sèche.

13. Formulation absorbante de dioxyde de carbone selon l'une quelconque des revendications précédentes, comprenant un détergent anionique.

14. Formulation absorbante de dioxyde de carbone selon l'une quelconque des revendications précédentes, ayant une teneur en eau de 12 à 25 % en poids.

15. Formulation absorbante de dioxyde de carbone selon l'une quelconque des revendications précédentes, ayant une teneur en eau de 14 à 18 % en poids.

16. Procédé de fabrication d'un absorbant de dioxyde de carbone selon l'une quelconque des revendications précédentes, le procédé comprenant les étapes de : mélange en quantités adaptées de (a) un hydroxyde, essentiellement dépourvu d'hydroxydes de sodium, potassium ou barium ; (b) du chlorure de calcium et/ou magnésium ; (c) un agent durcissant ; et (d) un agent liant ne formant pas un film ; et l'ajustement d'une teneur en eau du mélange à un taux de 12-25 % en poids.

**17.** Procédé selon la revendication 16, dans lequel (a)-(d) sont mélangés avec une quantité d'eau pour former une pâte, et la pâte est extrudée pour former des granules.

**18.** Procédé d'absorption de dioxyde de carbone en anesthésiologie médicale, le procédé comprenant la mise en contact d'un courant de gaz contenant du dioxyde carbone avec une formulation absorbante de dioxyde de carbone selon l'une quelconque des revendications 1 à 15, afin d'absorber au moins une partie du dioxyde de carbone du courant de gaz.

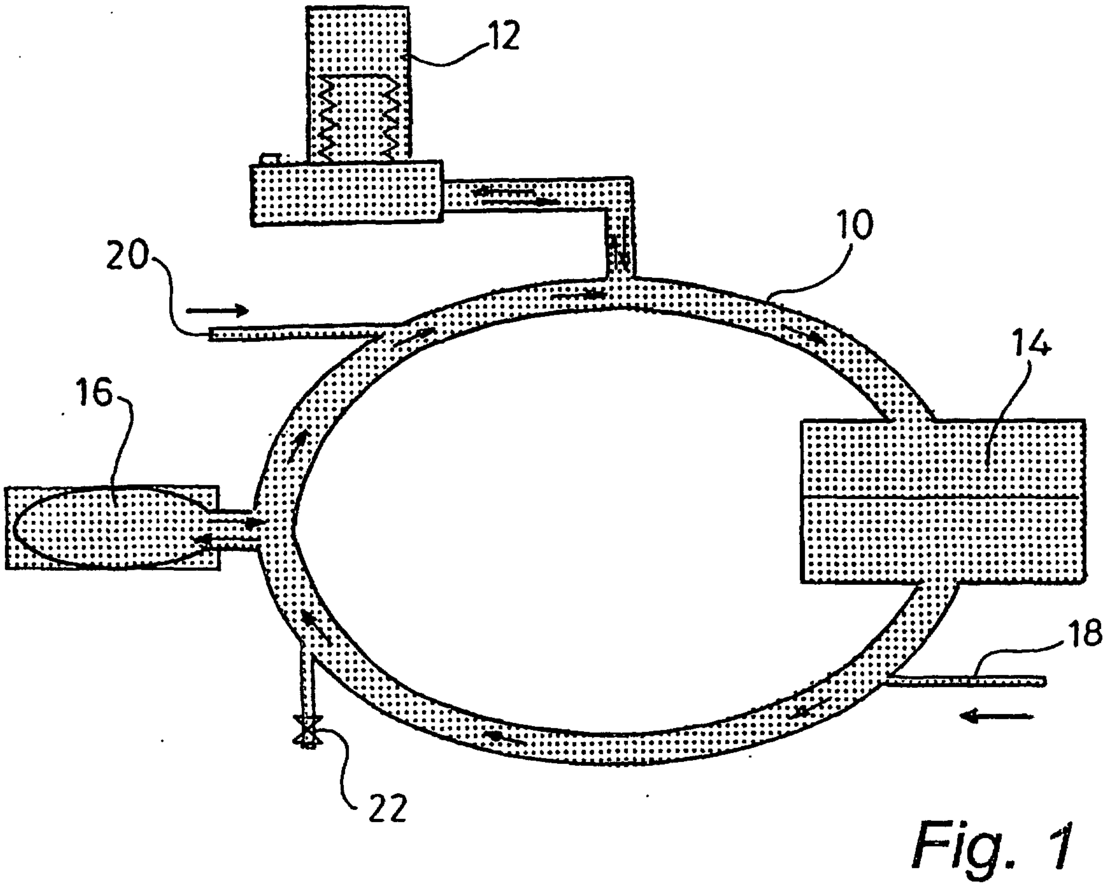
12
10
20
14
16
18
22

Fig. 1

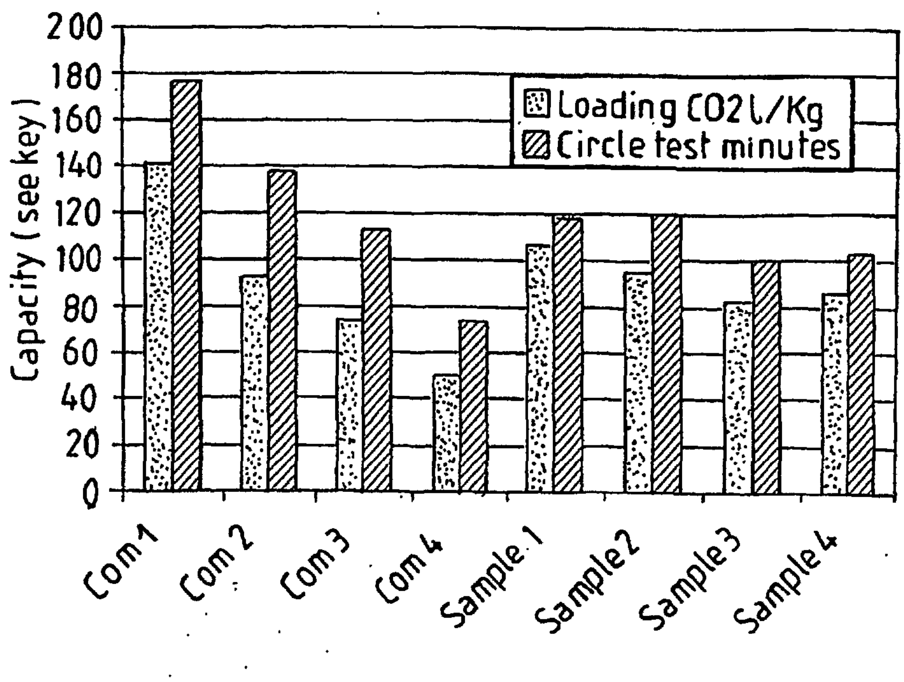
200
180
160
140
120
100
80
60
40
20
0
Capacity (see key)
Loading CO2 l/Kg
Circle test minutes
Com1
Com 2
Com 3
Com 4
Sample 1
Sample 2
Sample 3
Sample 4

Fig. 2

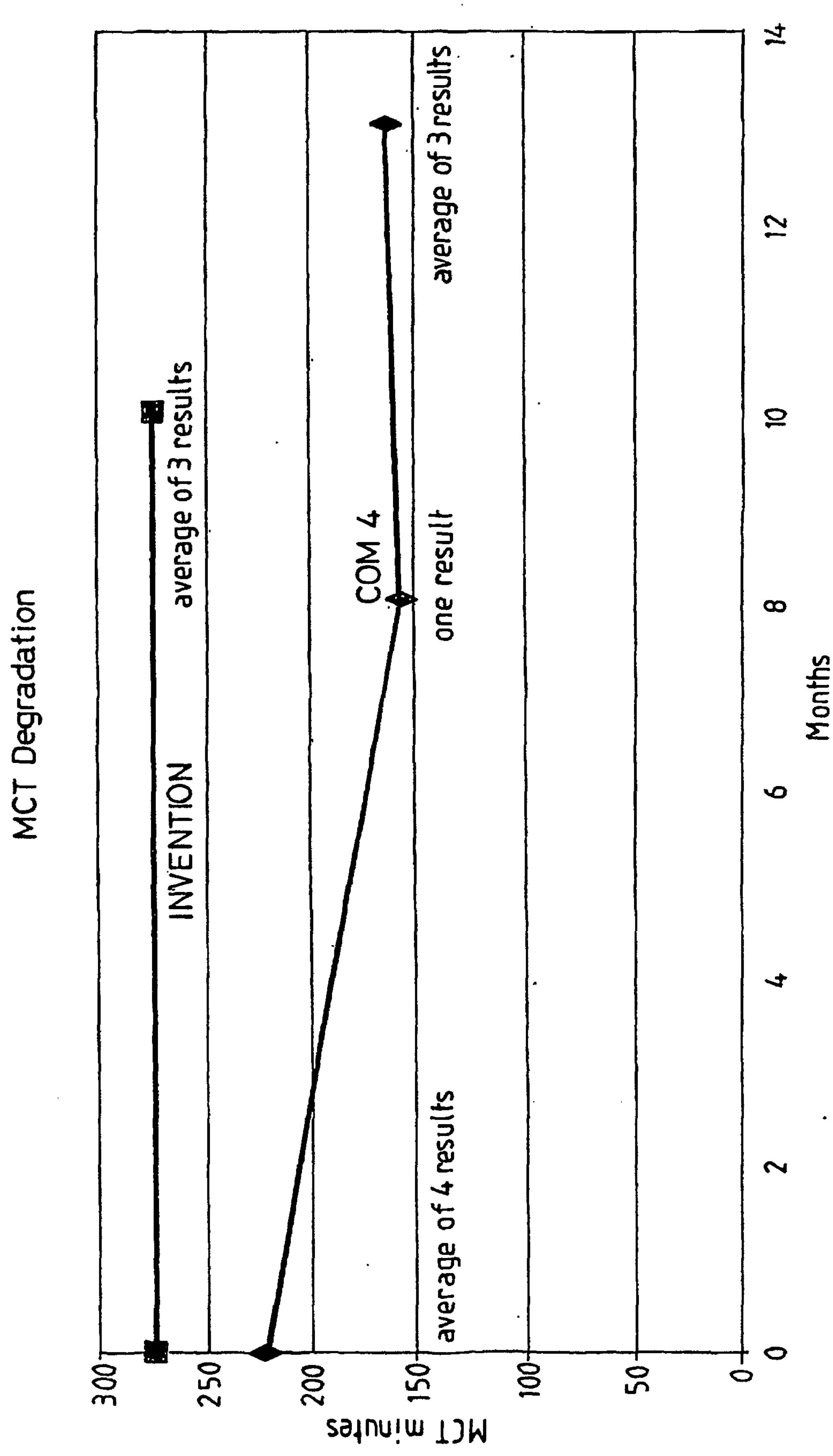
MCT Degradation
INVENTION
average of 3 results
COM 4
one result
average of 3 results
average of 4 results
MCT minutes
300
250
200
150
100
50
0
0
2
4
6
8
10
12
14
Months

Fig. 3